# DEMANDE DE BREVET EUROPEEN

(11) **EP 1 671 829 A1**
(43) Date de publication de la demande: **21.06.2006**
(21) Numéro de dépôt: 05292671.4
(22) Date de dépôt: 14.12.2005
(51) Int. Cl.: B60J 7/20, B60J 7/14, B60J 7/057, E05F 15/20, E05F 15/00

(54) **Procédé d'automatisation de l'ouverture et/ou de la fermeture d'ouvrants de véhicule et véhicule convertible équipé de moyens de commande d'un mouvement d'ouverture et/ou de fermeture automatique d'au moins un ouvrant**

(30) Priorité: 14.12.2004 FR 0452981
(71) Demandeur: Heuliez, 79140 Cerizay (FR)
(72) Inventeur: Queveau, Gérard, 79140 Le Pin (FR); Queveau, Paul, 79140 Montravers (FR); Baudeau, Marc, 79140 Bretignolles (FR); Dubreuil, Régis, 49300 Cholet (FR)
(74) Mandataire: Breese Derambure Majerowicz

(57) **Abrégé**

L'invention concerne un procédé d'ouverture et de fermeture automatique d'ouvrant (2) de véhicule (1) pivotant autour d'au moins deux articulations, ledit procédé prévoyant de protéger des zones d'interférences (ZAP1, ZAP2, ZAP3, ZAP4, ZAP5) en disposant d'au moins un détecteur de présence et/ou d'au moins un détecteur de contact et comprenant les étapes suivantes :
- L'émission d'un signal de commande d'ouverture ou de fermeture du ou des ouvrant(s) (2),
- Respectivement l'ouverture ou la fermeture automatique et complète du ou des ouvrant(s) (2) au cours de laquelle s'effectue:
   - La surveillance de l'occurrence des interférences, par les détecteurs, qui en cas de détection d'interférence génère un signal de détection ; et
   - Le traitement du signal de détection par une unité de calcul qui génère un signal d'actionnement commandant les moyens d'actionnement du ou des ouvrant(s) (2) selon un mode de fonctionnement adapté à la situation détectée.

## Description

L'invention concerne un procédé d'ouverture et de fermeture automatique d'ouvrant de véhicule. Elle concerne également un véhicule convertible en cabriolet utilisant ce procédé.

L'invention s'applique à des ouvrants tels que des portes ou des hayons. L'invention s'applique tout particulièrement aux ouvrants que l'on trouve par exemple sur des véhicules convertibles en cabriolet. Il s'agit alors de toits rétractables, pliables rigides ou souples et de capots de coffre à double sens d'ouverture.

En particulier, l'invention a pour objectif d'automatiser totalement le mouvement d'ouverture et/ou de fermeture de tels ouvrants. Elle a également pour objectif de déclencher automatiquement de tels mouvements et de surveiller d'éventuelles interférences entre un corps humain ou un corps extérieur et les ouvrants au cours de tels mouvements.

On connaît de l'art antérieur des systèmes automatiques de fermeture et d'ouverture d'ouvrant de voiture, ainsi que des systèmes de surveillance d'interférences pour des ouvrants tel que des portes ou des vitres de portes.

Cependant, il n'existe pas de système de surveillance complet proposant de surveiller tous les types d'interférences. En effet, l'un des problèmes majeurs qui se pose, lors de l'ouverture ou la fermeture d'ouvrant de véhicule, est de protéger à la fois :
- Les personnes ou les objets contre des pincements entre des parties mobiles et des parties fixes du véhicule,
- Les parties mobiles contre des interférences avec des obstacles situés dans l'environnement du véhicule tel qu'un mur ou un plafond.

En outre, l'art antérieur ne prévoit pas de système automatique d'ouverture ou de fermeture d'ouvrants à plusieurs articulations tels que des toits rétractables, pliables rigides ou souples et de capots de coffre à double sens d'ouverture. Dans ce cas particulier, le problème est particulièrement délicat à résoudre car les ouvrants possèdent plusieurs articulations et balayent donc dans leurs mouvements des volumes plus importants et de formes plus complexes.

De plus, on prévoit dans l'art antérieur des systèmes de surveillance fonctionnant uniquement lors de la fermeture des ouvrants et ne s'intéressant pas à leur ouverture.

Enfin, on prévoit dans l'art antérieur des systèmes de surveillance actifs uniquement à la fin de cycle de fermeture de l'ouvrant. Ce type de surveillance ne permet pas d'anticiper les interférences et ne permet pas au système d'adopter un mode de fonctionnement adapté à la distance séparant l'ouvrant de l'interférence.

L'invention a pour but de résoudre ces problèmes en proposant un procédé d'automatisation d'ouverture ou de fermeture d'ouvrant, particulièrement bien adapté à des ouvrants de véhicules convertibles en cabriolet tels que des toits rétractables : pliables, rigides ou souples ou des capots de coffre à double sens et proposant un système complet de détection des interférences.

A cet effet, et selon un premier aspect, l'invention propose un procédé d'ouverture et de fermeture automatique d'au moins un ouvrant de véhicule pivotant autour d'au moins deux articulations, l'ouverture et la fermeture dudit ouvrant étant actionné par un dispositif d'actionnement ledit procédé prévoyant de protéger des zones d'interférences en disposant d'au moins un détecteur de présence 8 et/ou d'au moins un détecteur de contact 9 caractérisé en ce que ledit procédé comprend les étapes suivantes :
- L'émission d'un signal de commande d'ouverture ou de fermeture du ou des ouvrant(s),
- Respectivement l'ouverture ou la fermeture automatique et complète du ou des ouvrant(s) au cours de laquelle s'effectue :
   - La surveillance de l'occurrence des interférences, par les détecteurs, qui en cas de détection d'interférence génère un signal de détection ; et
   - Le traitement du signal de détection par une unité de calcul 18 qui génère un signal d'actionnement commandant les moyens d'actionnement du ou des ouvrant(s) selon un mode de fonctionnement adapté à la situation détectée.

Ainsi, l'invention a pour but d'automatiser et de sécuriser entièrement l'ouverture et la fermeture d'ouvrant. Avantageusement, elle permet ainsi de disposer d'une multitude de moyen de commande à distance tel que : téléphonie, Internet, télécommande, capteur, etc sans risquer d'endommager le véhicule ou de blesser une personne. En effet, l'automatisation implique une protection accrue vis à vis des personnes et des corps extérieurs.

Selon un deuxième aspect, l'invention concerne un véhicule 1 convertible en cabriolet équipé d'au moins un détecteur de présence 8 et/ou d'au moins un détecteur de contact 9, de moyens d'actionnement d'au moins un ouvrant, d'une unité de calcul et dont l'ouvrant est constitué par un toit rétractable et/ou un capot de coffre 2, le toit rétractable étant déplaçable entre une position où il recouvre l'habitacle du véhicule 1 et une position de rangement situé à l'écart de l'habitacle, le capot de coffre 2 pouvant s'ouvrir de l'avant vers l'arrière pour le rangement du toit et de l'arrière vers l'avant pour accéder à un espace de rangement des bagages, ledit véhicule étant caractérisé en ce qu'il est équipé de moyens de commande d'un mouvement d'ouverture et/ou de fermeture automatique du ou des ouvrant(s), de moyens de surveillance de ces ouvrants et des moyens de traitement d'un signal de détection générant un signal d'actionnement du ou des ouvrants permettant l'exécution du procédé.

Les autres caractéristiques de l'invention résultent de la description qui suit d'un mode de réalisation, description effectuée en référence aux figures annexées dans lesquelles :
- La figure 1 est un schéma représentant les mouvements d'ouverture d'un capot de coffre à double sens ;
- La figure 2 est un schéma représentant le mouvement d'un toit rétractable ;
- Les figure 3a, 3b, 3c sont des schémas des zones à protéger (ZAP) des interférences pour un véhicule possédant un toit rétractable et un coffre à double sens d'ouverture ;
- La figure 4 est un schéma synoptique du système anti-pincement fonctionnant avec la fonction OU ;
- La figure 5 est un schéma synoptique du système anti-pincement fonctionnant avec la fonction ET ;
- La figure 6 est un schéma fonctionnel représentant des exemples d'émetteurs de signaux de commande et des exemples de réalisations de signaux d'informations ;

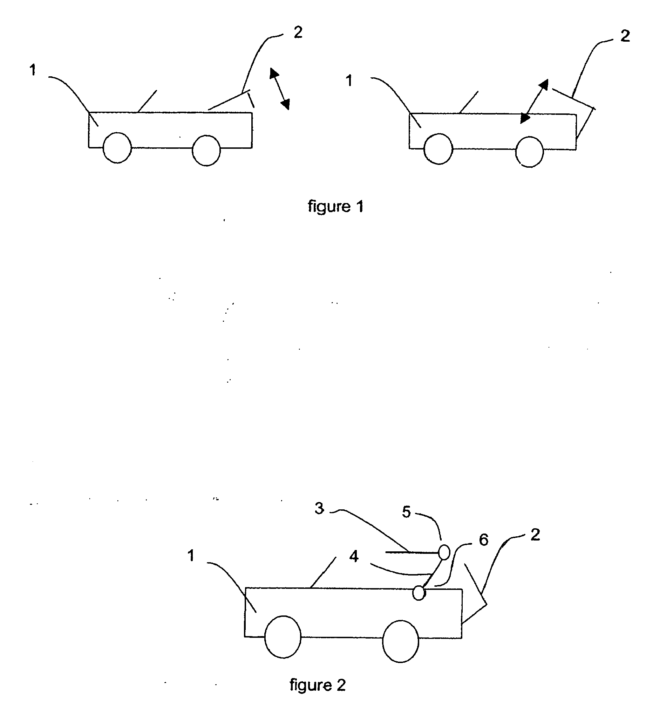

Selon un mode de réalisation de l'invention détaillé à la figure 1, le capot de coffre 2 du véhicule 1 possède deux sens d'ouverture. Le capot de coffre 2 peut ainsi effectuer une rotation autour d'une première articulation, de l'arrière vers l'avant pour permettre un accès aux bagages ou autour d'une seconde articulation, de l'avant vers l'arrière pour permettre le rangement du toit ouvrant.

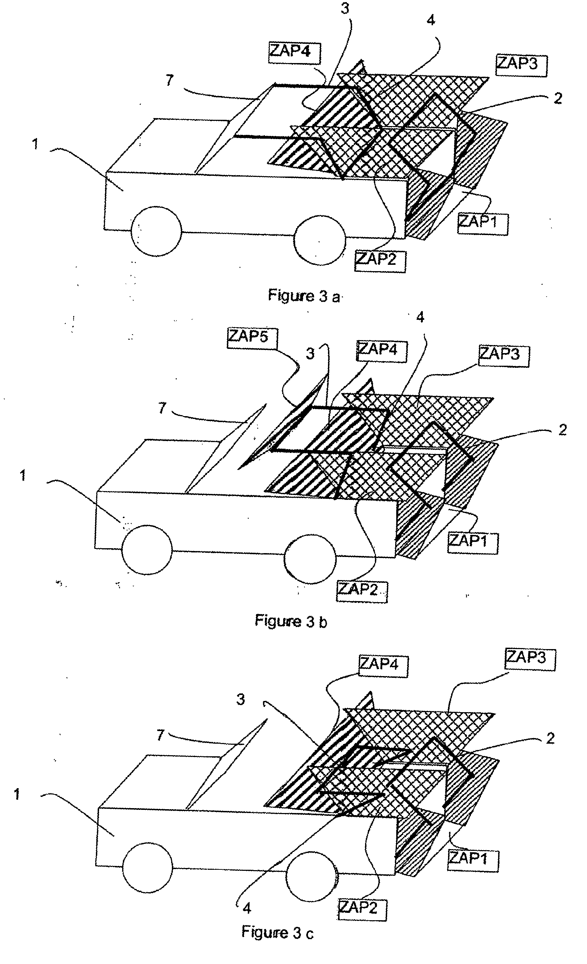

Selon la réalisation détaillée figure 2, le toit rétractable est composé de deux éléments : un élément arrière 4 et un élément avant 3. L'élément de toit arrière 4 est articulé à la structure du véhicule et peut effectuer une rotation autour d'une première articulation 6 afin de venir se loger dans la partie du coffre prévue à cet effet. L'élément avant 3 est articulé autour d'une deuxième articulation 5 mobile située entre les deux éléments pour venir se plaquer contre l'élément arrière 4.

Ainsi, selon les réalisations détaillées figures 1 et 2, le capot de coffre et le toit rétractable possèdent deux articulations.

Les moyens d'actionnement des ouvrants comprennent des actionneurs électriques et / ou hydrauliques ainsi que des dispositifs de vérouillage et dévérouillage des ouvrants entre eux d'une part et par rapport à la structure du véhicule 1 d'autre part.

Dans le cas ou le système à une énergie cinétique trop importante, il peut être prévu d'appliquer un dispositif de freinage.

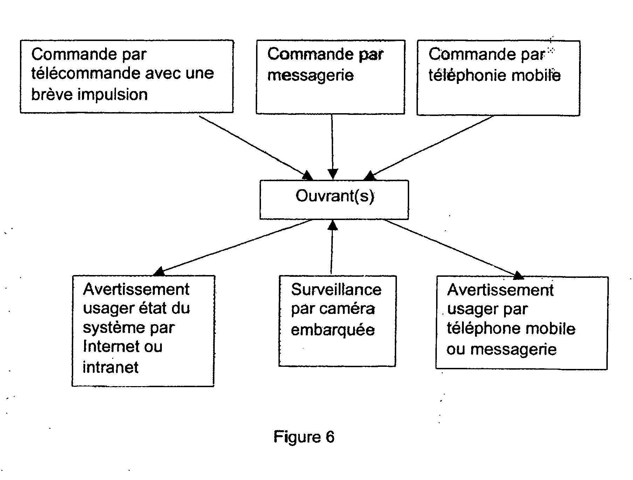

Le fonctionnement du procédé d'ouverture ou de fermeture automatique du ou des ouvrant(s) est le suivant ;
Un signal de commande est émis et déclenche un cycle d'ouverture ou de fermeture des ouvrants. Ce signal de commande peut être émis par différents moyens, représentés figure 6 : interrupteur, système de commande à distance, Internet, Intranet, messagerie électronique, téléphonie, détecteur d'événement atmosphérique (capteur de pluie, capteur de lumière, etc.), détecteur d'intrusion.

Bien évidemment, le procédé de commande décrit ci-dessus peut être utilisé indépendamment du procédé d'ouverture et de fermeture d'ouvrants décrit dans cette demande de brevet.

Lors de ce cycle d'ouverture, des détecteurs surveillent des zones à protéger (ZAP). L'invention prévoit au moins un détecteur de présence 8 (ou détecteur sans contact) permettant de détecter des interférences à distance ou au moins un détecteur avec contact 9. En variante, il peut être prévu de combiner l'utilisation d'au moins un détecteur de présence 8 et d'au moins un détecteur avec contact 9.

Les détecteurs de présence 8 ou sans contact peuvent utiliser des technologies de détection à distance appelées détection à balayage (ondes électromagnétiques, ondes fréquentielles, optique ou capacitif).

Les détecteurs avec contact 9 peuvent être des systèmes mécaniques à ressorts ou déformables à mémoire de forme tels que des joints ou rubans caoutchouteux appelé également détection périphérique.

Selon un mode de réalisation de l'invention détaillé sur les figures 3 a à 3 d, il est possible de décrire 5 zones à protéger (ZAP) contre les interférences. Les zones à protéger sont délimitées de sorte à pouvoir surveiller les interférences sur la totalité du mouvement des ouvrants pour le mouvement d'ouverture comme pour le mouvement de fermeture.

La ZAP 1 permet de sécuriser l'ouverture comme la fermeture du capot du coffre 2 lorsqu'il s'articule dans les deux sens. Cette zone est définie dans l'espace par un volume situé à l'arrière du véhicule, entre les deux bords latéraux du capot du coffre 2 et s'étendant dans le volume défini par le mouvement du capot du coffre 2 dans ces deux sens d'articulation.

La ZAP 2 et la ZAP 3 permettent de sécuriser les mouvements des deux ouvrants. Ces zones sont définies par des volumes s'étendant sensiblement dans les axes des parties latérales du véhicule 1. En effet, les zones d'interférences ZAP 2 et ZAP3 sont définies par des volumes s'étendant sensiblement entre les deux articulations des ouvrants.

La ZAP 4 permet de sécuriser l'ouverture ou la fermeture du toit ouvrant. Cette zone est définie dans un volume situé à l'intérieur du véhicule 1.

La ZAP 5 permet de sécuriser l'ouverture ou la fermeture du toit. Cette zone se situe entre l'élément de toit avant 3 et le haut du pare brise 7 du véhicule 1.

Les détecteurs surveillent l'occurrence des interférences dans ces ZAP. En cas de détection d'interférences au cours de l'ouverture ou la fermeture du ou des ouvrant(s), les détecteurs provoquent l'émission d'un signal de détection.

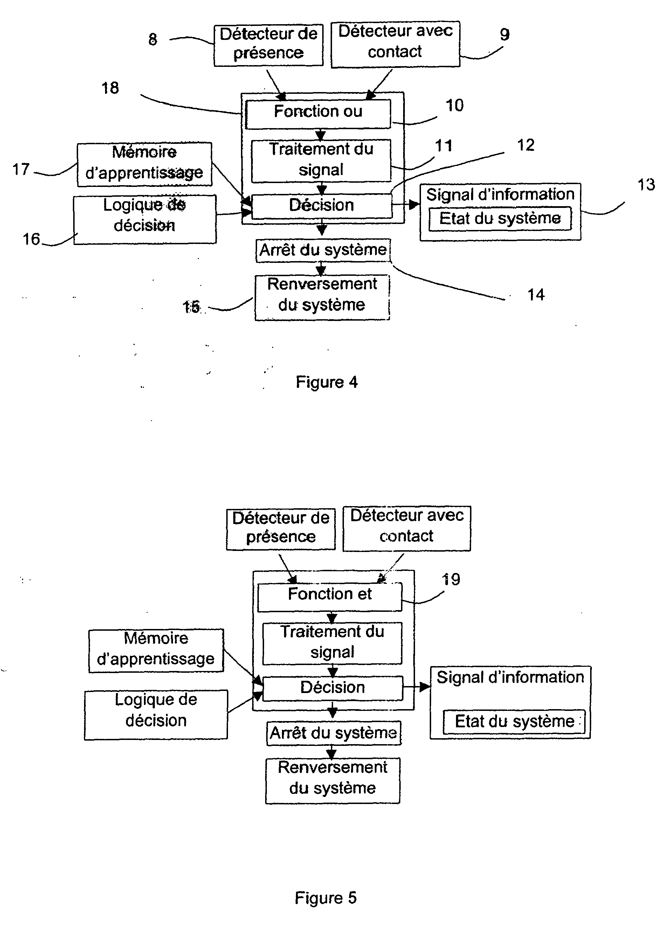

Les fonctions OU 10 ou ET 19, représenté figure 4 et 5, combinent les deux types de détections : sans contact et avec contact créant une plus grande possibilité de détection. Les détections avec contact ou sans contact peuvent être utilisées indépendamment

Une unité de calcul 18 réalise un traitement du signal 11 de détection émis. Ainsi, le traitement du signal 11 filtre le signal issu des capteurs par des algorithmes spécifiques permettant de dépolluer les informations du bruit d'environnement extérieur au système.

A partir des informations provenant de la mémoire d'apprentissage 17 et/ou de la logique de décision 16 et du signal de détection préalablement traité, le sous-système de décision 12 détermine un mode de fonctionnement adapté à la situation détectée. L'unité de calcul 18 transmet ce mode de fonctionnement sous la forme d'un signal d'actionnement aux moyens d'actionnement du ou des ouvrant(s) ainsi que sous la forme d'un signal d'information 13 à destination de l'usager.

Les modes de fonctionnement adaptés peuvent être les suivants :
- Diminution de la vitesse lorsque le système détecte l'approche d'un obstacle éventuel humain ou matériel afin de mieux gérer l'inertie du système
- Renversement 15 s'il s'agit d'une détection d'origine humaine
- Arrêt du système 14 s'il s'agit d'une détection d'origine matériel

Le signal d'information 13 permet de transmettre à l'utilisateur du véhicule les informations concernant la situation détectée, le mode de fonctionnement et la situation du ou des ouvrant(s). Le signal d'information 13 peut être généré sous forme d'images, de sons, ou de messages envoyés via Internet.

Le signal d'information 13 peut également déclencher un dispositif d'alerte consistant à transmettre un message d'alerte visuel ou auditif au(x) passager(s) du véhicule ou à transmettre hors du véhicule l'information d'alerte sous diverses formes. L'alerte peut par exemple être transmise via téléphonie mobile, radio, Internet, messagerie ou système d'alarme conventionnel.

Des exemples de signaux d'information sont représentés figure 6.

La mémoire d'apprentissage 17 contient des informations relatives aux paramètres variables de l'environnement extérieur (température extérieure, pluie, etc.) ou relatives aux paramètres du système de toit et du véhicule (usure des composants, température de l'huile dans la centrale hydraulique...).

La logique de décision 16 permet de déterminer la décision à prendre en fonction des paramètres détectés tels que la nature de l'obstacle, l'endroit de la détection, la position de l'ouvrant à l'instant de la détection, le type de détection (contact ou présence).

## Revendications

1. Procédé d'ouverture et de fermeture automatique d'au moins un ouvrant de véhicule pivotant autour d'au moins deux articulations, l'ouverture et la fermeture dudit ouvrant étant actionné par un dispositif d'actionnement ledit procédé prévoyant de protéger des zones d'interférences en disposant d'au moins un détecteur de présence (8) et/ou d'au moins un détecteur de contact (9) **caractérisé en ce que** ledit procédé comprend les étapes suivantes :
- L'émission d'un signal de commande d'ouverture ou de fermeture du ou des ouvrant(s),
- Respectivement l'ouverture ou la fermeture automatique et complète du ou des ouvrant(s) au cours de laquelle s'effectue :
- La surveillance de l'occurrence des interférences, par les détecteurs, qui en cas de détection d'interférence génère un signal de détection ; et
- Le traitement du signal de détection par une unité de calcul (18) qui génère un signal d'actionnement commandant les moyens d'actionnement du ou des ouvrant(s) selon un mode de fonctionnement adapté à la situation détectée.

2. Procédé selon la revendication 1, **caractérisé en ce que** il prévoit de protéger la zone d'interférence ZAP 2 et/ou la zone d'interférence ZAP 3, lesdites zones d'interférences ZAP 2 et ZAP 3 étant définies par des volumes s'étendant sensiblement entre les deux articulations des ouvrants.

3. Procédé selon la revendication 1 ou 2, **caractérisé en ce que** le mode de fonctionnement adapté à la situation détectée est choisi parmi les actions suivantes sur le ou les mouvements des ouvrant(s) ou toutes combinaisons de ces actions : le ralentissement, l'arrêt, le renversement partiel ou total jusqu'à l'état de départ de l'ouvrant.

4. Procédé selon l'une des revendications 1 à 3, **caractérisé en ce que** le sous-système de décision (12) détermine un fonctionnement adapté à la situation détectée à partir d'informations contenues dans une logique de décision (16) et/ou une mémoire d'apprentissage (17).

5. Procédé selon l'une des revendications 1 à 4, **caractérisé en ce que** le signal de commande est émis par un interrupteur, par un système de commande à distance, par téléphonie mobile ou par Internet et commande alors l'ouverture ou la fermeture du ou des ouvrants.

6. Procédé selon l'une quelconque des revendications 1 à 4, **caractérisé en ce que** le signal de commande est émis par un capteur tel qu'un capteur de pluie ou de lumière ou un capteur d'intrusion et commande alors l'ouverture ou la fermeture du ou des ouvrants.

7. Procédé selon l'une quelconque des revendications 1 à 6, **caractérisé en ce que** l'unité de calcul (18) génère en outre un signal d'information (13) destiné à l'usager du véhicule et rendant compte de la situation détectée, du mode de fonctionnement et de la situation du ou des ouvrant(s).

8. Procédé selon la revendication 7, **caractérisé en ce que** ledit signal d'information (13) est généré sous forme d'images, de sons ou de messages envoyés via Internet, téléphonie mobile ou messagerie.

9. Procédé selon l'une quelconque des revendications 1 à 8, **caractérisé en ce que** l'ouvrant est un toit rétractable comprenant au moins deux éléments de toit (3,4) articulés entre eux et dont l'un est articulé à la structure du véhicule (1).

10. Procédé selon l'une quelconque des revendications 1 à 9, **caractérisé en ce que** l'ouvrant est un capot de coffre (2) articulé à la structure du véhicule (1) pour pivoter autour d'une première articulation (5) de l'arrière vers l'avant et autour d'une deuxième articulation (6) de l'avant vers l'arrière.

11. Procédé selon l'une quelconque des revendications 1 à 10, **caractérisé en ce que** les détecteurs de présence (8) peuvent être des détecteurs à ondes électromagnétiques, à ondes fréquentielles, optique ou capacitif.

12. Procédé selon l'une quelconque des revendications 1 à 11, **caractérisé en ce que** les détecteurs à contacts (9) peuvent être des systèmes mécaniques à ressorts ou déformables tels que des joints ou rubans caoutchouteux

13. Véhicule convertible en cabriolet équipé d'au moins un détecteur de présence (8) et/ou d'au moins un détecteur de contact (9), de moyens d'actionnement d'au moins un ouvrant, d'une unité de calcul (18) et dont l'ouvrant est constitué par un toit rétractable et/ou un capot de coffre (2), le toit rétractable étant déplaçable entre une position où il recouvre l'habitacle du véhicule et une position de rangement situé à l'écart de l'habitacle, le capot de coffre (2) pouvant s'ouvrir de l'avant vers l'arrière pour le rangement du toit et de l'arrière vers l'avant pour accéder à un espace de rangement des bagages, ledit véhicule étant **caractérisé en ce qu'**il est équipé de moyens de commande d'un mouvement d'ouverture et/ou de fermeture automatique du ou des ouvrant(s), de moyens de surveillance de ces ouvrants et de moyens de traitement d'un signal de détection générant un signal d'actionnement du ou des ouvrants permettant l'exécution du procédé selon l'une quelconque des revendications 1 à 12.
